# EUROPEAN PATENT SPECIFICATION

(11) **EP 4 285 519 B1**
(45) Date of publication and mention of the grant of the patent: **27.11.2024**
(21) Application number: 21702935.4
(22) Date of filing: 29.01.2021
(51) Int. Cl.: H04L 67/00, H04L 41/16, H04W 24/02, H04W 24/10, G06N 20/00, H04L 41/14

(54) **MACHINE LEARNING MODEL RENEWAL**
ERNEUERUNG EINES MASCHINENLERNMODELLS
RENOUVELLEMENT DE MODÈLE D'APPRENTISSAGE AUTOMATIQUE

(43) Date of publication of application: 06.12.2023
(73) Proprietor: Nokia Technologies Oy, 02610 Espoo (FI)
(72) Inventor: BEGA, Dario, 80802 München (DE); TANG, Haitao, 02620 Espoo (FI); SARTORI, Cinzia, 82049 Pullach (DE)
(74) Representative: Nokia EPO representatives
(86) International application number: PCT/EP2021/052092
(87) International publication number: WO 2022/161615

(56) References cited:
- WO-A1-2019/206196
- US-A1- 2021 044 488

## Description

### Field

Various example embodiments relate to machine learning model renewal. More specifically, various example embodiments exemplarily relate to measures (including methods, apparatuses and computer program products) for realizing machine learning model renewal.

### Background

The present specification generally relates to utilization and management of machine learning (ML) models.

There are user equipment (UE) based ML use cases that realize and/or enhance control-plane (CP) network functions for radio access network (RAN) / core network (CN).

An example of a handover (HO) optimization use case shows how the network can benefit by running an artificial intelligence (AI) / ML model at the UE. As detailed in 3^{rd} Generation Partnership Project (3GPP) technical report (TR) 28.809, the handover optimization is currently based on radio conditions for selecting the target gNodeB (gNB) upon handover. The handover process may result into wastage of UE and network resources and the handover process may introduce service disruption due to increased latency and radio link failures. To improve handover performances, the 5G system (5GS) may train an AI/ML inference model using UE-related data such as reference signal received power (RSRP), UE location, and UE trajectory from multiple UEs. Then, the 5GS distributes the trained AI/ML inference model to each UE for proactively triggering a handover based on the output of the AI/ML inference model.

Another example of a use case of AI/ML models is load prediction to prevent cell congestion as described in use case #2 in clause 5.1.2 in TR 23.700-91. In this use case, the 5GS, to prevent cell congestion, may train an AI/ML inference model to forecast a UE's load pattern. The 5GS forwards the trained AI/ML inference model to the UEs that can notify the 5GS about their load pattern forecast by using the input data such as UE-specific location data, channel and signal conditions, etc. Based on the load pattern forecast returned by the UEs, the 5GS is able to optimize the network, to thereby avoid cell congestion.

These UE-based ML use cases utilize their ML models and the data from the UEs' measurements of the network to make predictions and take proper actions. These ML models can be provided by the network or self-trained by the UEs with their measurements of a certain network. These ML models can work correctly only for the network (or its alike) where the profile / natural of its measurement data is same as or very similar to that of the data used to train these models.

There are also ML cases in which the model is shared among network functions (NF). In TR 23.700-91, KI #19 studies trained data model sharing between multiple network data analytics function (NWDAF) instances. According thereto, the possibility for a NWDAF consumer to request a new AI model in case the performance does not meet the requirements is foreseen.

When a UE with the ML model received from the network (trained e.g. by an NWDAF or a management data analytics function (MDAF)) moves away from the network where its measurements data have been used to train the model, or the network context changes, the UE may get into a different network with clearly different measurement data. In such case, the performance of the ML model and its corresponding action would likely degrade and become erroneous, as the network context has changed.

Hence, the problem arises that a UE may apply an AI/ML (inference) model which is not suitable (anymore) for the network situation experienced by the UE.

Hence, there is a need to provide for machine learning model renewal.

US2021044488A1 discloses a model updating method to resolve a problem of network performance deterioration due to model performance deterioration. A first function entity sends a model update policy to a second function entity. The model update policy includes an update condition of a model of a first network element, and the model of the first network element indicates to adjust a parameter of the first network element. When receiving an update request, the first function entity performs a procedure of updating the model of the first network element, where the update request is triggered by the second function entity in accordance with determining, by the second function entity, the model meets the update condition.

### Summary

Various example embodiments aim at addressing at least part of the above issues and/or problems and drawbacks.

The invention is defined by the independent claims.

Further embodiments are set out in the dependent claims.

Any one of the above aspects enables efficient ways to detect a mismatch with respect to the AI/ML (inference) model and the network (context), to indicate the mismatch, and to get a new (suitable) model from network to thereby solve at least part of the problems and drawbacks identified in relation to the prior art.

By way of example embodiments, there is provided machine learning model renewal. More specifically, by way of example embodiments, there are provided measures and mechanisms for realizing machine learning model renewal.

Thus, improvement is achieved by methods, apparatuses and computer program products enabling/realizing machine learning model renewal.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a block diagram illustrating an apparatus according to example embodiments,
Figure 6 is a schematic diagram of a procedure according to example embodiments,
Figure 7 is a schematic diagram of a procedure according to example embodiments,
Figure 8 is a schematic diagram of a procedure according to example embodiments,
Figure 9 is a diagram of a distribution of training observations and current data observations according to example embodiments,
Figure 10 (Figures 10-A to 10-C) shows a schematic diagram of signaling sequences according to example embodiments,
Figure 11 (Figures 11-A to 11-C) shows a schematic diagram of signaling sequences according to example embodiments, and
Figure 12 is a block diagram alternatively illustrating apparatuses according to example embodiments.

### Detailed description

The present disclosure is described herein with reference to particular non-limiting examples and to what are presently considered to be conceivable embodiments.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) machine learning model renewal.

As discussed above, the problem arises that a UE may apply AI/ML (inference) models which are not suitable (anymore) for the network situation experienced by the UE.

The same problem exists also when the ML model is shared among NFs. Even though in TR 23.700-91 in clause 6.5.2 (Sol. #5 to KI #19) the option to request a ML model update is included, no mechanisms to detect the need of ML model renewal are proposed.

Example embodiments thus address the necessity to detect a mismatch between the UE's pre-trained model and the current network context. When the mismatch is detected, the UE's model can be either renewed with the matching model provided by the current network, or the current model can be retrained on data from the current network context.

Example embodiments are hereinafter discussed in general terms.

According to example embodiments, a solution to detect the mismatch between the pre-trained model sent by the 5GS to the AI/ML model consumer (i.e., UE or NF or MnF) and the network context is provided.

According to example embodiments, the 5GS is responsible to train the AI/ML model that is being sent to the AI/ML model consumer for inference (AI/ML inference model, also mentioned as machine learning inference model). According to further example embodiments, if the ground truth data (i.e., real outputs of respective inputs) is not available to evaluate the performance of the inference model, the 5GS is also responsible to train another AI/ML model (AI/ML monitoring model, also mentioned as machine learning monitoring model) to profile the dataset used to train the AI/ML inference model.

According to example embodiments, function entities of an AI/ML model consumer, the 5GS, and a data producer (entity), as well as their interworking to detect the mismatch between the pretrained (pre-trained) model and the current network context are provided.

Based on the operational conditions, one of the following detection mechanisms is selected as the suitable detection mechanism to check whether the AI/ML inference model is working properly in terms of performance:
1. If the AI/ML model consumer has the ability to evaluate the performance of the AI/ML inference model, i.e., if the ground truth data related to the input data utilized for inference are available at the AI/ML model consumer, according to exemplary embodiments, the 5GS builds only the AI/ML inference model. Then the 5GS transmits the AI/ML inference model to the AI/ML model consumer, and along with the AI/ML inference model, transmits its performance (reference performance) evaluated right after the AI/ML inference model training phase on the test dataset. According to example embodiments, the AI/ML model consumer compares the actual performance of the applied AI/ML inference model (determined based on the ground truth data) with the reference performance received from the 5GS. If the performance degradation is beyond a defined threshold, i.e., predetermined value (agreed between the 5GS and the AI/ML model consumer), this means that the context of the input data has changed, and that the AI/ML inference model needs to be renewed. Therefore, according to example embodiments, the AI/ML model consumer notifies the 5GS to retrain the AI/ML inference model with / including new data from the new context. According to example embodiments, the 5GS, after renewing the AI/ML inference model, transmits the new AI/ML inference model to the AI/ML model consumer along with its new performance (new reference performance).
2. On the other hand, if the AI/ML model consumer does not have access to the ground truth or the ground truth is not available at the AI/ML model consumer, according to example embodiments, the 5GS builds both the AI/ML inference model and an AI/ML monitoring model to profile the dataset used to train the AI/ML inference model. According to example embodiments, the following detection mechanism options are available depending on where the input data (network related input data) used by the AI/ML model consumer for running the AI/ML inference model would be collected:
   2a. If the 5GS collects the input data, according to example embodiments, the 5GS forwards the input data to the AI/ML model consumer, and the 5GS is responsible of monitoring the AI/ML inference model performance by checking the input data profile by employing the AI/ML monitoring model. If a mismatch among the actual input data profile and the profile of the training data utilized to train the AI/ML inference model is detected (based on a defined threshold), according to example embodiments, the 5GS retrains the AI/ML inference model with / including the new input data. According to example embodiments, the 5GS updates also the AI/ML monitoring model by retraining the AI/ML monitoring model with the same input data of the AI/ML inference model. According to example embodiments, subsequently, the updated AI/ML inference model is transmitted to the UE.
   2b. If the AI/ML model consumer is responsible to collect input data, according to example embodiments, the 5GS transmits the AI/ML monitoring model to the AI/ML Model consumer along with the AI/ML inference model. The AI/ML model consumer is responsible to monitor the input data profile by running the AI/ML monitoring model in parallel to the AI/ML inference model. If the AI/ML model consumer, utilizing the AI/ML monitoring model, detects a mismatch among the actual input data profile and the profile of the training data utilized to train the AI/ML inference model (based on a defined threshold), i.e. a change in the input data context, according to example embodiments, the AI/ML model consumer notifies the 5GS to retrain the AI/ML inference and monitoring models with / including the new data. According to example embodiments, subsequently, after retraining, the 5GS transmits the updated AI/ML inference and monitoring models to the AI/ML model consumer.
   2c. If the AI/ML model consumer is responsible to collect input data, according to example embodiments, alternatively, the 5GS transmits only the AI/ML inference model to the AI/ML model consumer. In this case, according to example embodiments, the AI/ML model consumer forwards the input data utilized for inference to the 5GS. Then, the 5GS is capable to, by utilizing the AI/ML monitoring model, compare the profile of the new input data with the one used for training the AI/ML inference model. To prevent expensive data exchanged between the AI/ML model consumer and the 5GS here, according to example embodiments, the AI/ML model consumer may only send a (potentially) small part of the collected input data to the 5GS, as long as the data is enough for the evaluation by the 5GS. If the 5GS, utilizing the AI/ML monitoring model, detects a mismatch and thus a context change, according to example embodiments, the 5GS retrains the AI/ML inference and monitoring models and sends the updated AI/ML inference model to the AI/ML model consumer.

An AI/ML monitoring model could be an unsupervised ML (monitoring) model able to identify whether there is a clear profile difference between the dataset utilized to train the inference model and the current data used as input to the inference model in runtime. When the AI/ML monitoring model detects the existence of such a clear profile difference, the AI/ML monitoring model determines that the current network context is clearly different from the network context where the AI/ML inference model has been trained with its training data. The 5GS is then requested to retrain the AI/ML inference model and, if relevant, the AI/ML monitoring model.

Example embodiments are applicable to any entity responsible for providing the ML model to the AI/ML model consumer and to any sharing mechanism adopted.

Example embodiments may impact open radio access network (O-RAN) specification documents, e.g. the AI/ML Workflow Technical Report, and the A1 specifications (for A1-ML - ML Model Management Service). Example embodiments may be reflected as well in the Non-Real Time RAN intelligent controller (RIC) Technical Report. Example embodiments may also impact R1 technical specification.

In addition, example embodiments impact TR 28.809, TS 23.288 and TR 23.700-91 by providing the solution to the proposed use cases in the technical reports, and since MDAF and NWDAF are the management function and 5G core network (5GC) NF responsible to provide analytics, represent the best candidates to train, and share AI/ML models, according to example embodiments, these (MDAF and NWDAF) are enhanced to support the functionalities introduced herein in relation to the 5GS.

In addition, example embodiments impact any interface utilized by a sharing mechanism to provide the ML models to the AI/ML model consumer. An example of interfaces that may be impacted are N1, N2, Namf, and Nnwdaf in case the AI/ML models are sent to the AI/ML model consumer by the 5GS core network (CN), or Uu in the case the AI/ML models are shared by the RAN. According to example embodiments, these interfaces are enhanced to enable the exchange of messages, AI/ML inference and monitoring models, AI/ML model-related information such as performance data (including non-3GPP data) needed to perform the inferences and training of the models. In this case, example embodiments also impact TS 23.501, TS 23.502.

According to example embodiments, a method according to the above-discussed principle is also applicable for a network / OAM entity to monitor the operability of an inference model.

Subsequently, example embodiments as discussed above are explained in other words.

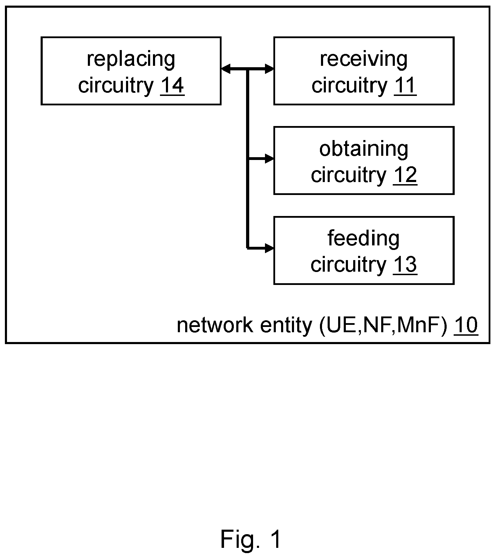

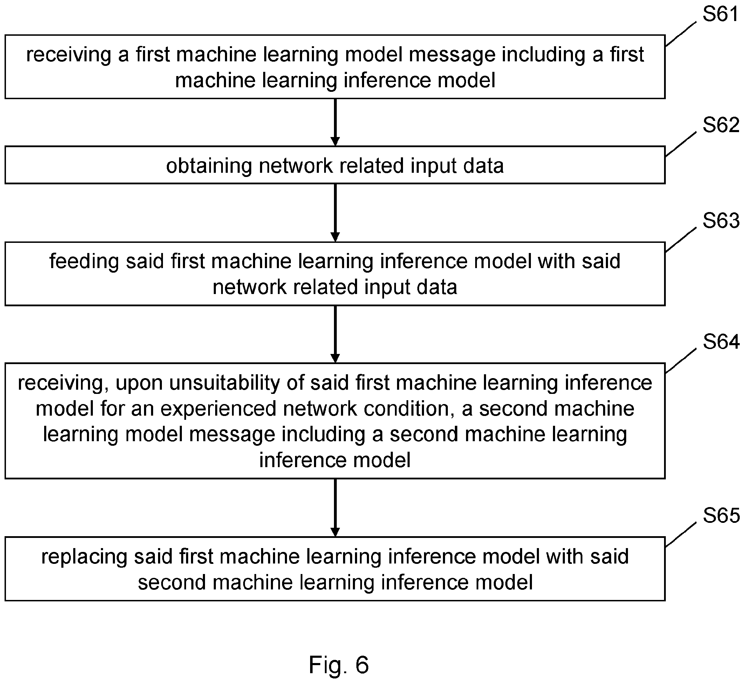

Figure 1 is a block diagram illustrating an apparatus according to example embodiments. The apparatus may be a network entity 10 such as a user equipment (UE) or a network function (NF) entity or a management function (MnF) entity comprising a receiving circuitry 11, an obtaining circuitry 12, a feeding circuitry 13, and a replacing circuitry 14. The receiving circuitry 11 receives a first machine learning model message including a first machine learning inference model. The obtaining circuitry 12 obtains network related input data. The feeding circuitry 13 feeds said first machine learning inference model with said network related input data. The receiving circuitry 11, further, receives, upon unsuitability of said first machine learning inference model for an experienced network condition, a second machine learning model message including a second machine learning inference model. The replacing circuitry 14 replaces said first machine learning inference model with said second machine learning inference model. Figure 6 is a schematic diagram of a procedure according to example embodiments. The apparatus according to Figure 1 may perform the method of Figure 6 but is not limited to this method. The method of Figure 6 may be performed by the apparatus of Figure 1 but is not limited to being performed by this apparatus.

As shown in Figure 6, a procedure according to example embodiments comprises an operation of receiving (S61) a first machine learning model message including a first machine learning inference model, an operation of obtaining (S62) network related input data, an operation of feeding (S63) said first machine learning inference model with said network related input data, an operation of receiving (S64), upon unsuitability of said first machine learning inference model for an experienced network condition, a second machine learning model message including a second machine learning inference model, and an operation of replacing (S65) said first machine learning inference model with said second machine learning inference model.

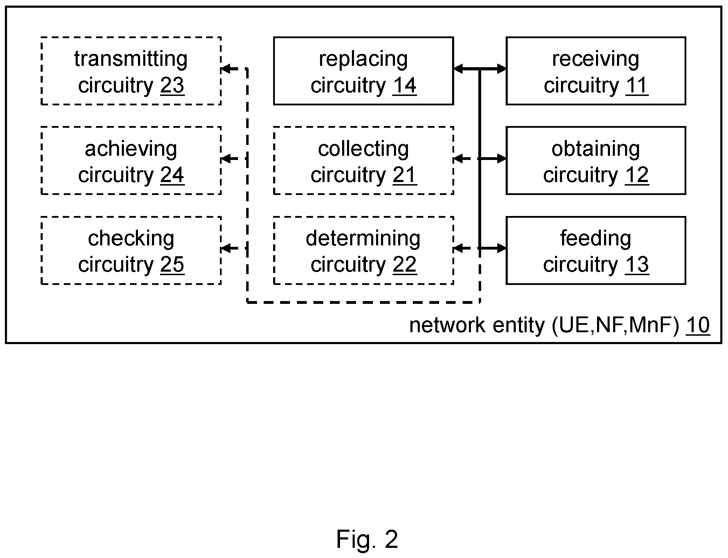

Figure 2 is a block diagram illustrating an apparatus according to example embodiments. In particular, Figure 2 illustrates a variation of the apparatus shown in Figure 1. The apparatus according to Figure 2 may thus further comprise a collecting circuitry 21, a determining circuitry 22, a transmitting circuitry 23, an achieving circuitry 24, and/or a checking circuitry 25.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

In particular a case is considered where ground truth is not available/accessible at the network entity (UE/NF/MnF), and where e.g. the 5GS/NWDAF collects the input data (network related input data).

According to a variation of the procedure shown in Figure 6, exemplary details of the obtaining operation (S62) are given, which are inherently independent from each other as such. Such exemplary obtaining operation (S62) according to example embodiments may comprise an operation of receiving said network related input data.

In particular a case is considered where the ground truth is not available/accessible at the network entity (UE/NF/MnF), and where e.g. the network entity (UE/NF/MnF) collects the input data.

According to a variation of the procedure shown in Figure 6, exemplary details of the obtaining operation (S62) are given, which are inherently independent from each other as such. According to such variation, said first machine learning model message includes a first machine learning monitoring model. Such exemplary obtaining operation (S62) according to example embodiments may comprise an operation of collecting said network related input data.

According to a variation of the procedure shown in Figure 6, exemplary additional operations are given, which are inherently independent from each other as such. According to such variation, an exemplary method according to example embodiments may comprise an operation of feeding said first machine learning monitoring model with said network related input data, an operation of determining a mismatch degree between said network related input data and a first training data set utilized for training of said first machine learning inference model and said first machine learning monitoring model based on a result of said first machine learning monitoring model fed with said network related input data, and an operation of transmitting, if said mismatch degree is larger than a predetermined value, a machine learning model retraining request message. Here, said machine learning model retraining request message includes a machine learning model retraining request and at least a portion of said network related input data.

According to further example embodiments, said second machine learning model message includes a second machine learning monitoring model.

In particular a case is considered where the ground truth available at the network entity (UE/NF/MnF).

According to a variation of the procedure shown in Figure 6, exemplary additional operations are given, which are inherently independent from each other as such. According to such variation, said first machine learning model message includes information on a first reference performance of said first machine learning inference model, and an exemplary method according to example embodiments may comprise an operation of achieving information indicative of ground truth data, and an operation of determining an actual performance of said first machine learning inference model by comparing a result of said first machine learning inference model fed with said network related input data with said information indicative of ground truth data.

According to a variation of the procedure shown in Figure 6, exemplary additional operations are given, which are inherently independent from each other as such. According to such variation, an exemplary method according to example embodiments may comprise an operation of checking whether said actual performance of said first machine learning inference model undercuts said first reference performance of said first machine learning inference model by more than a predetermined value, and an operation of transmitting, if said actual performance of said first machine learning inference model undercuts said first reference performance of said first machine learning inference model by more than a predetermined value, a machine learning model retraining request message. Here, said machine learning model retraining request message includes a machine learning model retraining request and at least a portion of said network related input data.

According to further example embodiments, said second machine learning model message includes information on a second reference performance of said second machine learning inference model.

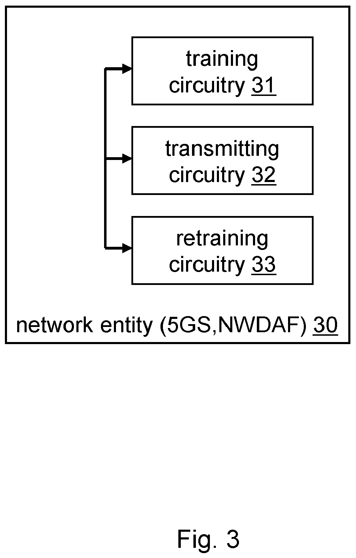

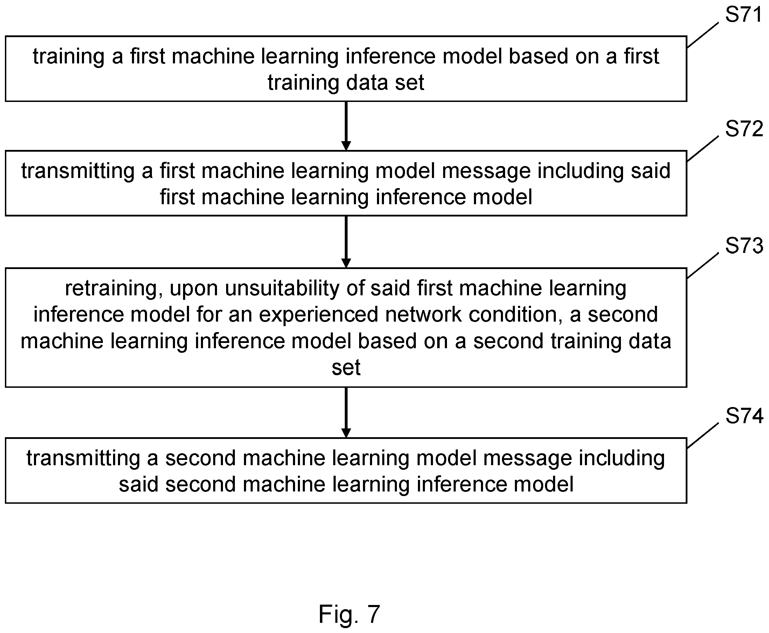

Figure 3 is a block diagram illustrating an apparatus according to example embodiments. The apparatus may be a network entity 30 such as the 5G system (5GS) (entity) or a network data analytics function (NWDAF) entity comprising a training circuitry 31, a transmitting circuitry 32, and a retraining circuitry 33. The training circuitry 31 trains a first machine learning inference model based on a first training data set. The transmitting circuitry 32 transmits a first machine learning model message including said first machine learning inference model. The retraining circuitry 33 retrains, upon unsuitability of said first machine learning inference model for an experienced network condition, a second machine learning inference model based on a second training data set. The transmitting circuitry 32, further, transmits a second machine learning model message including said second machine learning inference model. Figure 7 is a schematic diagram of a procedure according to example embodiments. The apparatus according to Figure 3 may perform the method of Figure 7 but is not limited to this method. The method of Figure 7 may be performed by the apparatus of Figure 3 but is not limited to being performed by this apparatus.

As shown in Figure 7, a procedure according to example embodiments comprises an operation of training (S71) a first machine learning inference model based on a first training data set, an operation of transmitting (S72) a first machine learning model message including said first machine learning inference model, an operation of retraining (S73), upon unsuitability of said first machine learning inference model for an experienced network condition, a second machine learning inference model based on a second training data set, and an operation of transmitting (S74) a second machine learning model message including said second machine learning inference model.

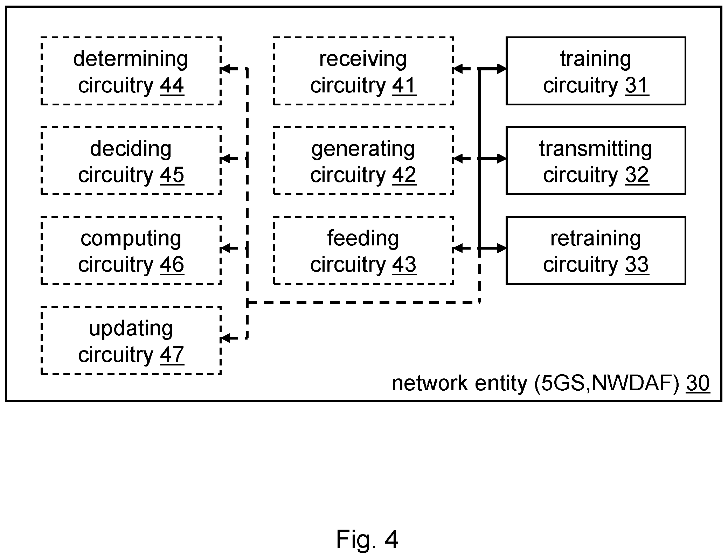

Figure 4 is a block diagram illustrating an apparatus according to example embodiments. In particular, Figure 4 illustrates a variation of the apparatus shown in Figure 3. The apparatus according to Figure 4 may thus further comprise a receiving circuitry 41, a generating circuitry 42, a feeding circuitry 43, a determining circuitry 44, a deciding circuitry 45, a computing circuitry 46, and/or an updating circuitry 47.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to a variation of the procedure shown in Figure 7, exemplary additional operations are given, which are inherently independent from each other as such. According to such variation, an exemplary method according to example embodiments may comprise an operation of transmitting a first data collection request, an operation of receiving a first data collection response including first collected data, and an operation of generating said first training data set based on said first collected data.

In particular a case is considered where the ground truth is not available/accessible at e.g. an UE/NF/MnF, and where the network entity (5GS/NWDAF) or e.g. the UE/NF/MnF collects the input data (network related input data).

According to a variation of the procedure shown in Figure 7, exemplary additional operations are given, which are inherently independent from each other as such. According to such variation, an exemplary method according to example embodiments may comprise an operation of training a first machine learning monitoring model based on said first training data set.

In particular a case is considered where the ground truth is not available/accessible at e.g. an UE/NF/MnF, and where the network entity (5GS/NWDAF) collects the input data.

According to a variation of the procedure shown in Figure 7, exemplary additional operations are given, which are inherently independent from each other as such. According to such variation, an exemplary method according to example embodiments may comprise an operation of transmitting network related input data, and an operation of feeding said first machine learning monitoring model with said network related input data.

According to a variation of the procedure shown in Figure 7, exemplary additional operations are given, which are inherently independent from each other as such. According to such variation, an exemplary method according to example embodiments may comprise an operation of transmitting a second data collection request, and an operation of receiving a second data collection response including second collected data as said network related input data.

According to a variation of the procedure shown in Figure 7, exemplary additional operations are given, which are inherently independent from each other as such. According to such variation, an exemplary method according to example embodiments may comprise an operation of determining a mismatch degree between said network related input data and said first training data set based on a result of said first machine learning monitoring model fed with said network related input data, and an operation of deciding, if said mismatch degree is larger than a predetermined value, to retrain said second machine learning inference model based on said network related input data as said second training data set.

According to a variation of the procedure shown in Figure 7, exemplary additional operations are given, which are inherently independent from each other as such. According to such variation, an exemplary method according to example embodiments may comprise an operation of training, if said mismatch degree is larger than a predetermined value, a second machine learning monitoring model based on said second training data set.

In particular a case is considered where the ground truth is not available/accessible at e.g. an UE/NF/MnF, and where e.g. the UE/NF/MnF collects the input data.

According to further example embodiments, said first machine learning model message includes said first machine learning monitoring model.

According to a variation of the procedure shown in Figure 7, exemplary additional operations are given, which are inherently independent from each other as such. According to such variation, an exemplary method according to example embodiments may comprise an operation of receiving a machine learning model retraining request message. Here, said machine learning model retraining request message includes a machine learning model retraining request and at least a portion of network related input data as said second training data set.

According to a variation of the procedure shown in Figure 7, exemplary additional operations are given, which are inherently independent from each other as such. According to such variation, an exemplary method according to example embodiments may comprise an operation of training a second machine learning monitoring model based on said second training data set. Here, said second machine learning model message includes said second machine learning monitoring model.

In particular a case is considered where the ground truth is available at e.g. an UE/NF/MnF.

According to a variation of the procedure shown in Figure 7, exemplary additional operations are given, which are inherently independent from each other as such. According to such variation, an exemplary method according to example embodiments may comprise an operation of computing a first reference performance of said first machine learning inference model based on said first machine learning inference model and said first training data set. Here, said first machine learning model message includes information on said first reference performance of said first machine learning inference model.

According to a variation of the procedure shown in Figure 7, exemplary additional operations are given, which are inherently independent from each other as such. According to such variation, an exemplary method according to example embodiments may comprise an operation of receiving a machine learning model retraining request message. Here, said machine learning model retraining request message includes a machine learning model retraining request and at least a portion of network related input data as said second training data set.

According to a variation of the procedure shown in Figure 7, exemplary additional operations are given, which are inherently independent from each other as such. According to such variation, an exemplary method according to example embodiments may comprise an operation of transmitting a second data collection request, an operation of receiving a second data collection response including second collected data, and an operation of updating said second training data set based on said second collected data.

According to a variation of the procedure shown in Figure 7, exemplary additional operations are given, which are inherently independent from each other as such. According to such variation, an exemplary method according to example embodiments may comprise an operation of computing a second reference performance of said second machine learning inference model based on said second machine learning inference model and said second training data set. Here, said second machine learning model message includes information on said second reference performance of said second machine learning inference model.

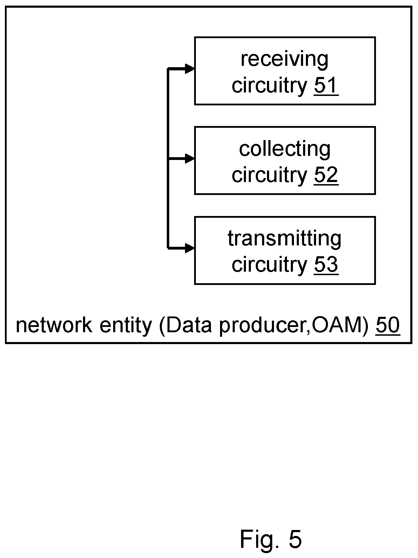

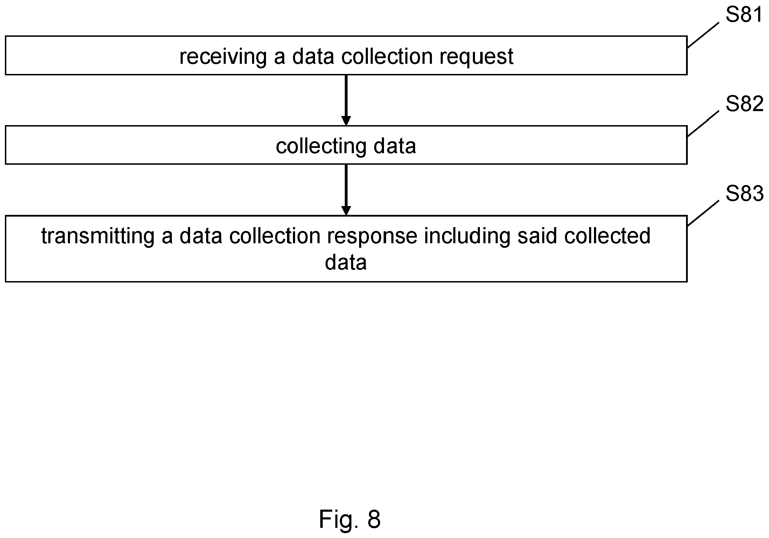

Figure 5 is a block diagram illustrating an apparatus according to example embodiments. The apparatus may be a network entity 50 such as a data producer or an operations, administration and maintenance (OAM) entity comprising a receiving circuitry 51, a collecting circuitry 52, and a transmitting circuitry 53. The receiving circuitry 51 receives a data collection request. The collecting circuitry 52 collects data. The transmitting circuitry 53 transmits a data collection response including said collected data. Figure 8 is a schematic diagram of a procedure according to example embodiments. The apparatus according to Figure 5 may perform the method of Figure 8 but is not limited to this method. The method of Figure 8 may be performed by the apparatus of Figure 5 but is not limited to being performed by this apparatus.

As shown in Figure 8, a procedure according to example embodiments comprises an operation of receiving (S81) a data collection request, an operation of collecting (S82) data, and an operation of transmitting (S83) a data collection response including said collected data.

In an embodiment at least some of the functionalities of the apparatus shown in Figure 5 may be shared between two physically separate devices forming one operational entity. Therefore, the apparatus may be seen to depict the operational entity comprising one or more physically separate devices for executing at least some of the described processes.

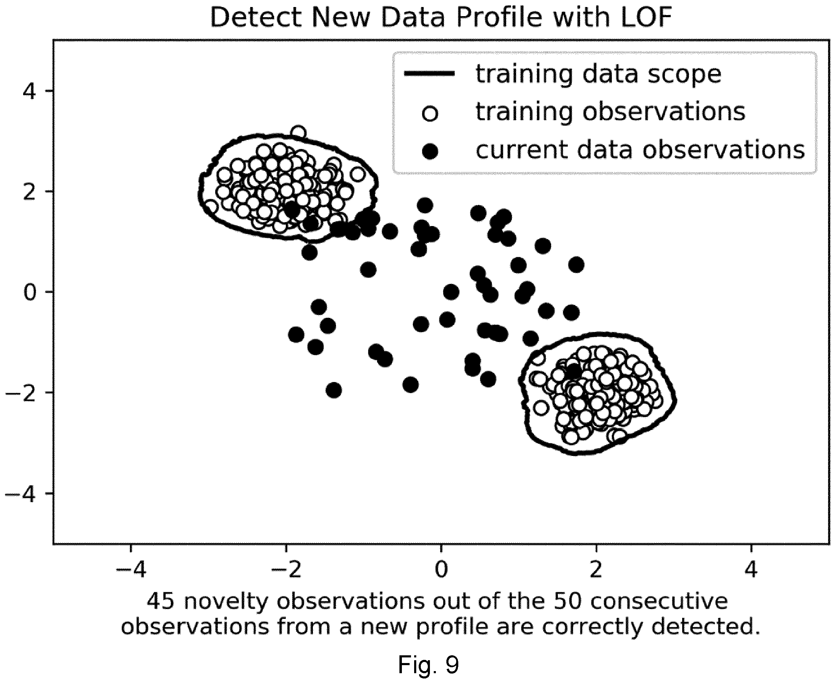

Subsequently, example embodiments as discussed above are explained in more specific terms with reference to Figures 9 to 11.

In particular, example embodiments explained below illustrate a specific mechanism to detect the profile difference (i.e., the mismatch), the specific mismatch detection procedures where the mismatch detection procedure to use is selected based on the conditions, and enhancement to the impacted interfaces with the UE taking the role of AI/ML model consumer. According to example embodiments, the same mechanisms are alternatively applied to NFs, e.g. with an NWDAF taking the role of AI/ML model consumer and the AI/ML models being shared by another NWDAF.

Figure 9 is a diagram of a distribution of training observations and current data observations according to example embodiments, and in particular illustrates an example outlier/novelty detection with a local outlier factor (LOF).

As illustrated in Figure 9, a profile difference can be detected by a mismatch detection mechanism which utilizes an unsupervised ML model (ML monitoring model), e.g., a local outlier factor (LOF).

According to example embodiments, the profile of the data utilized in such case would consist of the following (1) to (3):
(1) The metadata of the dataset used to train the model received by the UE / NF. According to example embodiments, this metadata could be in the form such as the vector of parameter names, i.e., (parameter_name_1, parameter_name_2, ... parameter_name_n). The dataset consists of the instances of the vector.
(2) The trained AI/ML monitoring model that effectively defines the operational scope for the inference model. This operational scope of the dataset defines the area where the data instances are collected and used to train the model. This operational scope is learnt by the AI/ML monitoring model during its training. The trained inference model is considered as operational or working whenever the new observation data are also collected within this area corresponding to the operational scope. In such case (i.e., the trained inference model being considered as operational or working as the new observation data are also collected within this area corresponding to the operational scope), there is no need of model renewal. For example as shown in Figure 9, the operational scope are learnt as the two clusters of vector instances surrounded by the lines denoted with "training data scope" by the monitoring model. Otherwise, any vector instances (e.g., the current data observations) collected outside the operational scope are considered by the monitoring model as outlier/novelty observations that are different from the data used to train the models.
(3) Threshold, e.g., a specific percentage (e.g. at least 30% of 50 current consecutive observations) of the data observations are collected outside the above operational scope.

According to example embodiments, this data profile is utilized for mismatch detection with the AI/ML monitoring model.

Namely, if data observations collected outside the above operational scope during the inference time amount to more than the threshold (item (3) above), there is a mismatch between the pretrained inference model and the current network context. Hence, retraining of both the inference model and the monitoring model is needed, and a respective decision is made according to example embodiments.

It is noted that there are different outlier / inlier /novelty detection solutions applicable. In the example of Figure 9, there are 45 novelty observations detected from the 50 consecutive observations, which is 90% of the 50 current consecutive observations, well above, the example threshold of 30%. In view thereof, in this example illustrated in Figure 9, the current network context is clearly different from the network context where the training data have been collected. The models thus need to be retrained with / including the data observations from the current network context, and a respective decision is made according to example embodiments.

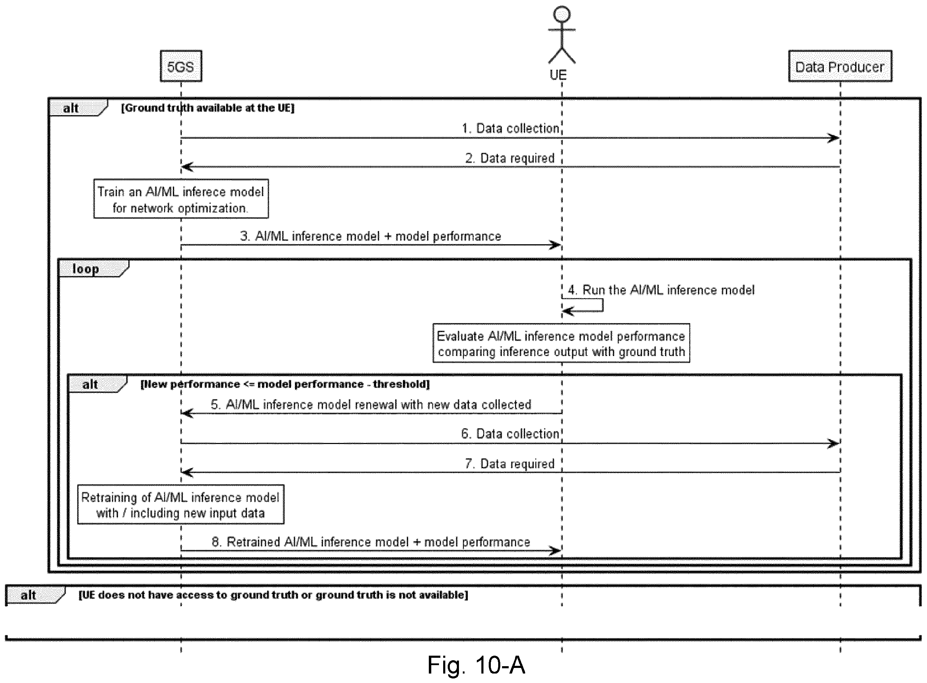

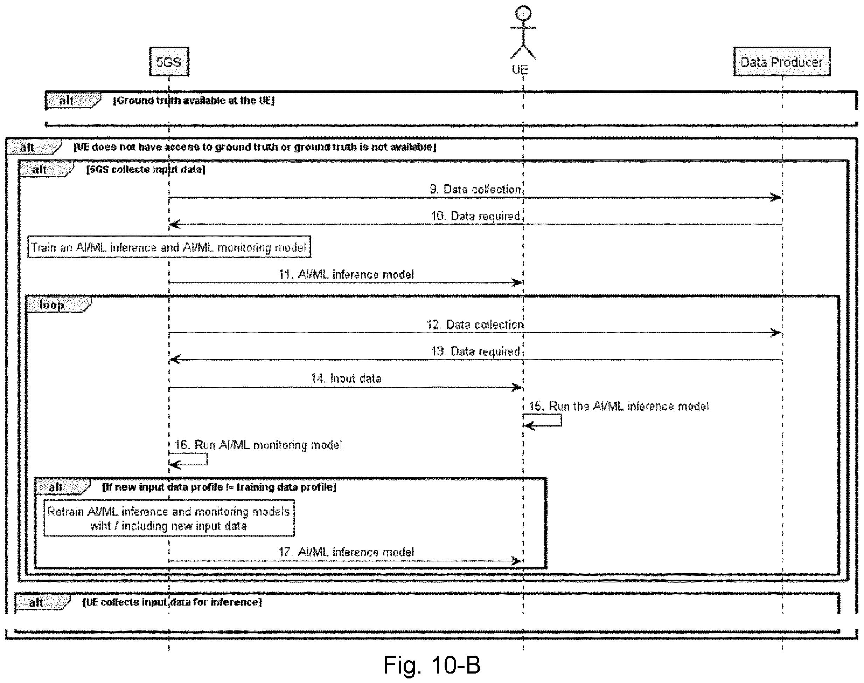

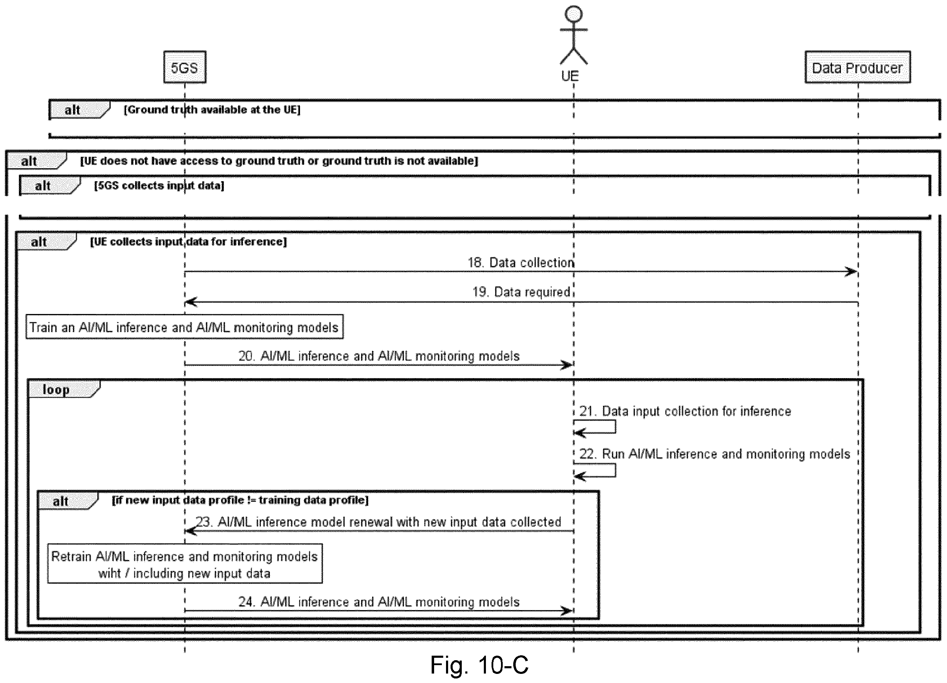

Figure 10 (Figures 10-A to 10-C) shows a schematic diagram of signaling sequences according to example embodiments, and in particular illustrates mismatch detection procedures with one being selected based on the conditions described above (availability/accessibility of ground truth, responsibility of input data (network related input data) collection) in case 5GS is responsible to share the AI/ML models with the UE.

In detail, according to example embodiments, one of the mismatch detection procedures is selected according to the conditions described above (availability/accessibility of ground truth, responsibility of input data (network related input data) collection).

That is, according to example embodiments, ML model consumer (e.g. UE) and ML model provider (e.g. 5GS, NWDAF) are not only enabled to apply any of the disclosed mismatch detection procedures but may also be configured to select the suitable mismatch detection procedure based on the conditions described above (availability/accessibility of ground truth, responsibility of input data (network related input data) collection).

Namely, as is illustrated in Figure 10, as a first range of alternatives, the availability/accessibility of ground truth is considered to select detection mechanism 1 or 2 as discussed above (detection mechanism 1, if the AI/ML model consumer has the ability to evaluate the performance of the AI/ML inference model, i.e., if the ground truth data related to the input data utilized for inference are available at the AI/ML model consumer, Figure 10-A; detection mechanism 2, if the AI/ML model consumer does not have access to the ground truth or the ground truth is not available at the AI/ML model consumer, Figure 10-B, Figure 10-C).

Further, as is illustrated in Figure 10, as a second range of alternatives (in case detection mechanism 2 is selected), the responsibility of input data (network related input data) collection is considered to select detection mechanism 2a or 2b as discussed above (detection mechanism 2a, if the 5GS collects the input data, Figure 10-B; detection mechanism 2b, if the AI/ML model consumer is responsible to collect input data, Figure 10-C).

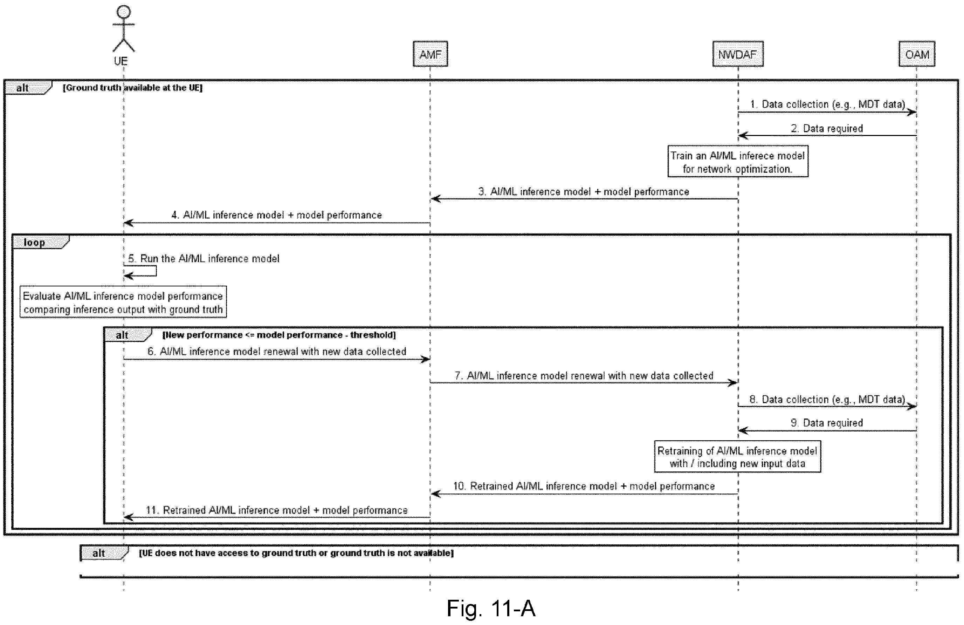

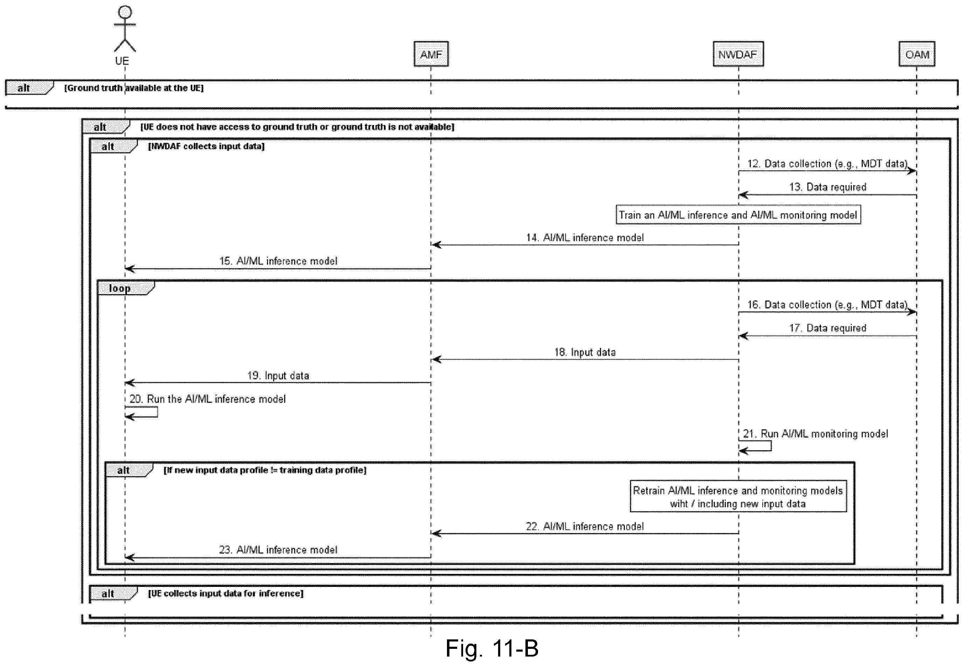

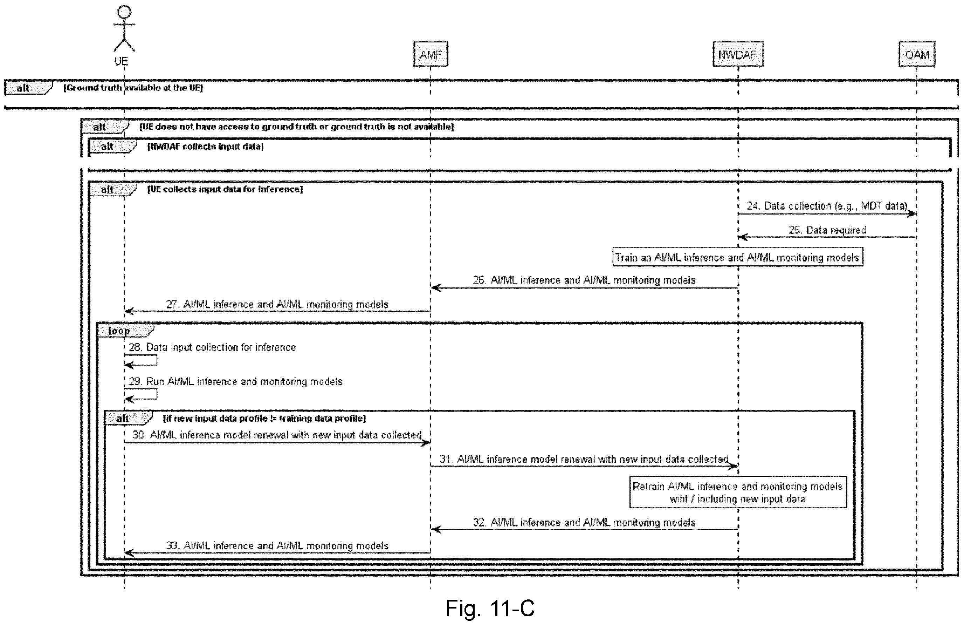

Figure 11 (Figures 11-A to 11-C) shows a schematic diagram of signaling sequences according to example embodiments, and in particular illustrates mismatch detection procedures with one being selected based on the conditions described above (availability/accessibility of ground truth, responsibility of input data (network related input data) collection) in case NWDAF (rather than 5GS) is responsible to share the AI/ML models with the UE.

Here, it is noted that an access and mobility management function (AMF) may be interposed between the NWDAF (being the ML model provider) and the UE (being the ML model consumer), where the AMF relays the communication between the ML model provider and the ML model consumer. Further, an OAM is exemplarily deployed as the data collector.

As already discussed in relation to Figure 10, according to example embodiments, ML model consumer (e.g. UE) and ML model provider (e.g. NWDAF) are not only enabled to apply any of the disclosed mismatch detection procedures but may also be configured to select the suitable mismatch detection procedure based on the conditions described above (availability/accessibility of ground truth, responsibility of input data (network related input data) collection).

Namely, as is illustrated in Figure 11, as a first range of alternatives, the availability/accessibility of ground truth is considered to select detection mechanism 1 or 2 as discussed above (detection mechanism 1, if the AI/ML model consumer has the ability to evaluate the performance of the AI/ML inference model, i.e., if the ground truth data related to the input data utilized for inference are available at the AI/ML model consumer, Figure 11-A; detection mechanism 2, if the AI/ML model consumer does not have access to the ground truth or the ground truth is not available at the AI/ML model consumer, Figure 11-B, Figure 11-C).

Further, as is illustrated in Figure 11, as a second range of alternatives (in case detection mechanism 2 is selected), the responsibility of input data (network related input data) collection is considered to select detection mechanism 2a or 2b as discussed above (detection mechanism 2a, if the NWDAF collects the input data, Figure 11-B; detection mechanism 2b, if the AI/ML model consumer is responsible to collect input data, Figure 11-C).

As is further illustrated in Figure 11 (Figures 11-A to 11-C), in such scenario, example embodiments impact/enhance interfaces as follows.

Example embodiments impact interfaces utilized by any sharing mechanism, requiring an enhancement in order to convey the AI/ML inference and monitoring models along with their performance information. Thus, example embodiments would impact all the specifications related to the affected interfaces.

As an example (see Figure 11), a 5GC NF as NWDAF could be the responsible to collect the input data from the Data Producer (in this case represented by the OAM), training the AI/ML inference and monitoring models and then forward them to the UE (taking the role of AI/ML model consumer) through the AMF. In this example, interfaces as Nnwdaf, Namf, N1 would be impacted by example embodiments and would require an enhancement to allow the forwarding of the AI/ML inference and monitoring models along with their metadata (as architecture of the models, input/output format, analytic produced, etc...) and their performance. Example embodiments would then impact e.g. TS 23.501, TS 23.502, TS 23.288.

For O-RAN, example embodiments might impact the following O-RAN specification documents: the AI/ML Workflow Technical Report, and the A1 specifications (the A1-ML - ML Model Management Service). Example embodiments may be reflected as well in the Non-Real Time RIC Technical Report.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

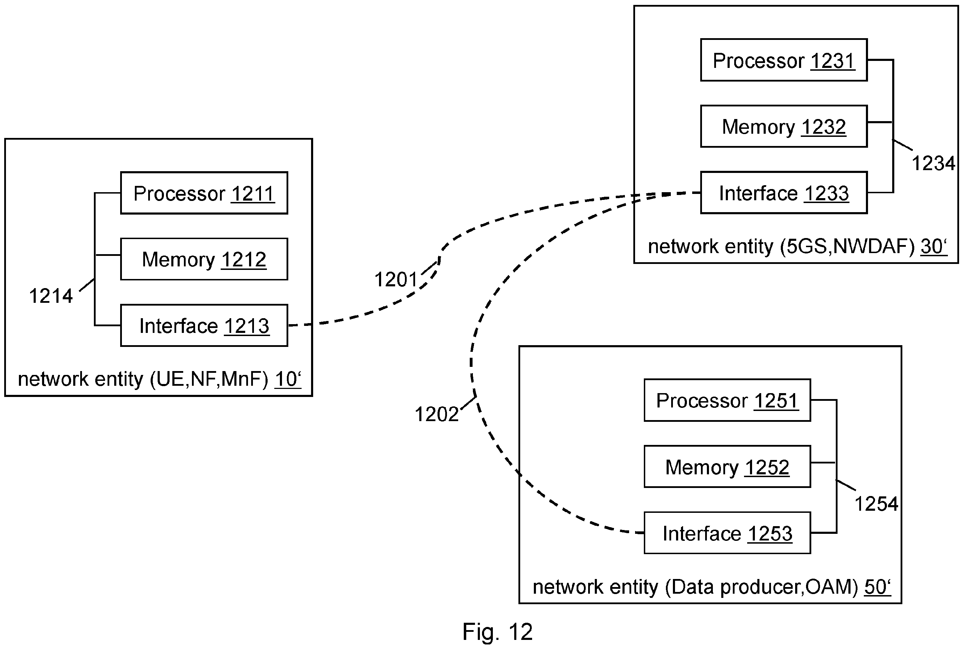

In Figure 12, an alternative illustration of apparatuses according to example embodiments is depicted. As indicated in Figure 12, according to example embodiments, the apparatus (network entity) 10' (corresponding to the network entity 10) comprises a processor 1211, a memory 1212 and an interface 1213, which are connected by a bus 1214 or the like. Further, according to example embodiments, the apparatus (network entity) 30' (corresponding to the network entity 30) comprises a processor 1231, a memory 1232 and an interface 1233, which are connected by a bus 1234 or the like. Further, according to example embodiments, the apparatus (network entity) 50' (corresponding to the network entity 50) comprises a processor 1251, a memory 1252 and an interface 1253, which are connected by a bus 1254 or the like. The apparatuses may be connected via links 1201, 1202, respectively.

The processor 1211/1231/1251 and/or the interface 1213/1233/1253 may also include a modem or the like to facilitate communication over a (hardwire or wireless) link, respectively. The interface 1213/1233/1253 may include a suitable transceiver coupled to one or more antennas or communication means for (hardwire or wireless) communications with the linked or connected device(s), respectively. The interface 1213/1233/1253 is generally configured to communicate with at least one other apparatus, i.e. the interface thereof.

The memory 1212/1232/1252 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network entity 10 comprises at least one processor 1211, at least one memory 1212 including computer program code, and at least one interface 1213 configured for communication with at least another apparatus. The processor (i.e. the at least one processor 1211, with the at least one memory 1212 and the computer program code) is configured to perform receiving a first machine learning model message including a first machine learning inference model (thus the apparatus comprising corresponding means for receiving), to perform obtaining network related input data (thus the apparatus comprising corresponding means for obtaining), to perform feeding said first machine learning inference model with said network related input data (thus the apparatus comprising corresponding means for feeding), to perform receiving, upon unsuitability of said first machine learning inference model for an experienced network condition, a second machine learning model message including a second machine learning inference model, and to perform replacing said first machine learning inference model with said second machine learning inference model (thus the apparatus comprising corresponding means for replacing).

According to example embodiments, an apparatus representing the network entity 30 comprises at least one processor 1231, at least one memory 1232 including computer program code, and at least one interface 1233 configured for communication with at least another apparatus. The processor (i.e. the at least one processor 1231, with the at least one memory 1232 and the computer program code) is configured to perform training a first machine learning inference model based on a first training data set (thus the apparatus comprising corresponding means for training), to perform transmitting a first machine learning model message including said first machine learning inference model (thus the apparatus comprising corresponding means for transmitting), to perform retraining, upon unsuitability of said first machine learning inference model for an experienced network condition, a second machine learning inference model based on a second training data set (thus the apparatus comprising corresponding means for retraining), and to perform transmitting a second machine learning model message including said second machine learning inference model.

According to example embodiments, an apparatus representing the network entity 50 comprises at least one processor 1251, at least one memory 1252 including computer program code, and at least one interface 1253 configured for communication with at least another apparatus. The processor (i.e. the at least one processor 1251, with the at least one memory 1252 and the computer program code) is configured to perform receiving a data collection request (thus the apparatus comprising corresponding means for receiving), to perform collecting data (thus the apparatus comprising corresponding means for collecting), and to perform transmitting a data collection response including said collected data (thus the apparatus comprising corresponding means for transmitting).

For further details regarding the operability/functionality of the individual apparatuses, reference is made to the above description in connection with any one of Figures 1 to 11, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for machine learning model renewal. Such measures exemplarily comprise receiving a first machine learning model message including a first machine learning inference model, obtaining network related input data, feeding said first machine learning inference model with said network related input data, receiving, upon unsuitability of said first machine learning inference model for an experienced network condition, a second machine learning model message including a second machine learning inference model, and replacing said first machine learning inference model with said second machine learning inference model.

### List of acronyms and abbreviations

- 3GPP: 3rd Generation Partnership Project
- 5GC: 5G core network
- 5GS: 5G system
- AI: artificial intelligence
- AMF: access and mobility management function
- CN: core network
- CP: control-plane
- gNB: gNodeB
- HO: handover
- LOF: local outlier factor
- MDAF: management data analytics function
- ML: machine learning
- MnF: management function
- NF: network function
- NWDAF: network data analytics function
- OAM: operations, administration and maintenance
- O-RAN: open radio access network
- RAN: radio access network
- RIC: RAN intelligent controller
- RSRP: reference signal received power
- TR: technical report
- UE: user equipment

## Claims

1. A method comprising
training (S71) a first machine learning inference model based on a first training data set,
computing a first reference performance of said first machine learning inference model based on said first machine learning inference model and said first training data set,
transmitting (S72), to a model consumer, a first machine learning model message including said first machine learning inference model and information on said first reference performance of said first machine learning inference model, upon determining unsuitability of said first machine learning inference model for a current network context of the model consumer based on said information, retraining the first machine learning inference model based on a second training data set, and
transmitting (S74), to the model consumer, a second machine learning model message including said retrained first machine learning inference model.

2. The method according to claim 1, further comprising
transmitting a first data collection request,
receiving a first data collection response including first collected data, and
generating said first training data set based on said first collected data.

3. The method according to claim 1 or 2, further comprising
receiving a machine learning model retraining request message, wherein
said machine learning model retraining request message includes a machine learning model retraining request and at least a portion of network related input data as said second training data set.

4. The method according to claim 3, further comprising
transmitting a second data collection request,
receiving a second data collection response including second collected data, and
updating said second training data set based on said second collected data.

5. The method according to claim 3 or 4, further comprising
computing a second reference performance of said retrained first machine learning inference model based on said retrained first machine learning inference model and said second training data set, wherein
said second machine learning model message includes information on said second reference performance of said retrained first machine learning inference model.

## Patentansprüche

1. Verfahren, das Folgendes umfasst
Trainieren (S71) eines ersten Maschinenlerninferenzmodells auf Basis eines ersten Trainingsdatensatzes,
Berechnen einer ersten Referenzleistung des ersten Maschinenlerninferenzmodells auf Basis des ersten Maschinenlerninferenzmodells und des ersten Trainingsdatensatzes,
Übertragen (S72) einer ersten Maschinenlernmodellnachricht, die das erste Maschinenlerninferenzmodell und Informationen über die erste Referenzleistung des ersten Maschinenlerninferenzmodells beinhaltet, zu einem Modellverbraucher,
nach Bestimmen einer Ungeeignetheit des ersten Maschinenlerninferenzmodells für einen aktuellen Netzwerkkontext des Modellverbrauchers auf Basis der Informationen erneutes Trainieren des ersten Maschinenlerninferenzmodells auf Basis eines zweiten Trainingsdatensatzes, und
Übertragen (S74) einer zweiten Maschinenlernmodellnachricht, die das erneut trainierte erste Maschinenlerninferenzmodell beinhaltet, zum Modellverbraucher.

2. Verfahren nach Anspruch 1, das ferner Folgendes umfasst
Übertragen einer ersten Datensammelanforderung,
Empfangen einer ersten Datensammelantwort, die erste gesammelte Daten beinhaltet, und
Erzeugen des ersten Trainingsdatensatzes auf Basis der ersten gesammelten Daten.

3. Verfahren nach Anspruch 1 oder 2, das ferner Folgendes umfasst
Empfangen einer Anforderungsnachricht zum erneuten Trainieren des Maschinenlernmodells, wobei
die Anforderungsnachricht zum erneuten Trainieren des Maschinenlernmodells eine Anforderung zum erneuten Trainieren des Maschinenlernmodells und mindestens einen Abschnitt von netzwerkbezogenen Eingabedaten als den zweiten Trainingsdatensatz beinhaltet.

4. Verfahren nach Anspruch 3, das ferner Folgendes umfasst
Übertragen einer zweiten Datensammelanforderung,
Empfangen einer zweiten Datensammelantwort, die zweite gesammelte Daten beinhaltet, und
Aktualisieren des zweiten Trainingsdatensatzes auf Basis der zweiten gesammelten Daten.

5. Verfahren nach Anspruch 3 oder 4, das ferner Folgendes umfasst
Berechnen einer zweiten Referenzleistung des erneut trainierten ersten Maschinenlerninferenzmodells auf Basis des erneut trainierten ersten Maschinenlerninferenzmodells und des zweiten Trainingsdatensatzes, wobei
die zweite Maschinenlernmodellnachricht Informationen über die zweite Referenzleistung des erneut trainierten ersten Maschinenlerninferenzmodells beinhaltet.

## Revendications

1. Procédé comprenant
l'entraînement (S71) d'un premier modèle d'inférence d'apprentissage machine sur la base de un premier jeu de données d'entraînement,
le calcul d'une première performance de référence dudit premier modèle d'inférence d'apprentissage machine sur la base dudit premier modèle d'inférence d'apprentissage machine et dudit premier jeu de données d'entraînement,
la transmission (S72) à un consommateur de modèle d'un premier message de modèle d'apprentissage machine comportant ledit premier modèle d'inférence d'apprentissage machine et des informations sur ladite première performance de référence dudit premier modèle d'inférence d'apprentissage machine,
en déterminant une inadéquation dudit premier modèle d'inférence d'apprentissage machine pour un contexte de réseau actuel du consommateur de modèle sur la base desdites informations, le réentraînement du premier modèle d'inférence d'apprentissage machine sur la base d'un deuxième jeu de données d'entraînement, et
la transmission (S74) au consommateur de modèle d'un deuxième message de modèle d'apprentissage machine comportant ledit premier modèle d'inférence d'apprentissage machine réentraîné.

2. Procédé selon la revendication 1, comprenant en outre
la transmission d'une première demande de collecte de données,
la réception d'une première réponse de collecte de données comportant des premières données collectées, et
la génération dudit premier jeu de données d'entraînement sur la base desdites premières données collectées.

3. Procédé selon la revendication 1 ou 2, comprenant en outre
la réception d'un message de demande de réentraînement de modèle d'apprentissage machine, dans lequel
ledit message de demande de réentraînement de modèle d'apprentissage machine comporte une demande de réentraînement de modèle d'apprentissage machine et au moins une partie des données d'entrée liées au réseau en tant que deuxième jeu de données d'entraînement.

4. Procédé selon la revendication 3, comprenant en outre
la transmission d'une deuxième demande de collecte de données,
la réception d'une deuxième réponse de collecte de données comportant des deuxièmes données collectées, et
la mise à jour dudit deuxième jeu de données d'entraînement sur la base desdites deuxièmes données collectées.

5. Procédé selon la revendication 3 ou 4, comprenant en outre
le calcul d'une deuxième performance de référence dudit premier modèle d'inférence d'apprentissage machine réentraîné sur la base dudit premier modèle d'inférence d'apprentissage machine réentraîné et dudit deuxième jeu de données d'entraînement, dans lequel
ledit deuxième message de modèle d'apprentissage machine comporte des informations sur ladite deuxième performance de référence dudit premier modèle d'inférence d'apprentissage machine réentraîné.
